# EUROPÄISCHE PATENTANMELDUNG

(11) **EP 1 669 845 A1**
(43) Veröffentlichungstag der Anmeldung: **14.06.2006**
(21) Anmeldenummer: 05111896.6
(22) Anmeldetag: 09.12.2005
(51) Int. Cl.: G06F 3/033

(54) **Menüeinträge in Drop-Down Menüs grafischer Bedienoberflächen**

(30) Priorität: 13.12.2004 EP 04029468
(71) Anmelder: SIEMENS AKTIENGESELLSCHAFT, 80333 München (DE)
(72) Erfinder: Windl, Helmut, 93077 Peising (DE)

(57) **Zusammenfassung**

Die Erfindung betrifft ein Verfahren zur Eingabe und Anzeige von Informationen, Daten und/oder Eingabeelementen in Drop-Down Menüs grafischer Bedienoberflächen wobei das Drop-Down Menüs (5) oder unterlagerte Menüebenen (9) eine Menge von Menüeinträgen (6a-6k, 11a-11g) beliebiger Art aufweist, wobei die Menge von Menüeinträgen wenigstens eine Anzahl von in beliebiger Kombination an- und abwählbaren Menüeinträgen in Form einer Check-Box-Liste (6e, 6f, 6h-6j, 11a-11g)und/oder sich gegenseitig ausschließenden und damit lediglich umschaltbaren Menüeinträgen in Form einer Radio-Button-Liste (6a-6d) umfasst, wobei der Menüeintrag in Form einer Check-Box-Liste und der Menüeintrag in Form einer Radio-Button-Liste jeweils seine eigene, signifikante, den Charakter des Menüeintrags beschreibende Zustandskennung im Drop-Down Menü (5) und im unterlagerten Menü (9) aufweist.

## Beschreibung

Die Erfindung betrifft ein Verfahren zur Eingabe und Anzeige von Informationen, Daten und/oder Eingabeelementen in Drop-Down Menüs grafischer Bedienoberflächen.

Zur Interaktion und als Kommunikationsschnittstelle zwischen Anwender und Computer werden grafische Bedienoberflächen eingesetzt. Sie stellen ein virtuelles Bedien- und Anzeigefeld dar, welches aus einzelnen Bedien- und Anzeigeobjekten besteht und über die der Anwender Befehle oder Informationen an den Computer weitergibt, wobei der Computer wiederum den Erhalt dieser Befehle und Informationen bzw. die Reaktion darauf zurückmeldet. Im Bestreben die Bedienung auch komplexerer Prozesse möglichst intuitiv zu gestalten und damit eine zügige Navigation durch das Programm zu ermöglichen, haben sich bestimmte Vereinheitlichungen durchgesetzt. Diese Vereinheitlichungen liegen im Wesentlichen in der Nutzung gleicher oder ähnlicher Bedien- und Anzeigeobjekte, wie beispielsweise Textboxen, Drop-Down Menüs, Auswahllisten, Buttons, Icons usw.

Nahezu alle Softwareprogramme, wobei Softwareprogramme in diesem Sinne Softwareapplikation sind, die auf dem Betriebssystem des Computer ablaufen, in denen es eines höheren Grades der Interaktion zwischen Anwender und Computer bedarf und die aus diesem Grunde eine umfangreichere grafische Bedienoberfläche brauchen, weisen grafische Bedienfenster auf. Die Softwareapplikationen selbst laufen i.d.R. in solchen Bedienfenstern, den Programmfenstern ab.

Drop-Down Menüs sind Dialoge innerhalb eines Programmfensters einer Softwareapplikation, die sich durch Anwahl eines Menüpunktes, unmittelbar unterhalb des angewählten Menüpunktes oder unmittelbar daneben öffnen und über die direkt Einstellungen des Programms durchgeführt werden können oder in weitere Bedienfenster verzweigt werden kann. Menüpunkte sind sensitive Felder auf der Menüleiste, die sich am oberen Rand des Programmfensters der Softwareapplikation befinden und i.d.R. aus einem Textstring, einem Textzeichen oder Symbol (Icon) bestehen, wobei die unmittelbare Umgebung des Textstrings, des Textzeichens oder des Symbols als sensitives Feld ausgeprägt ist. Die An- und Auswahl des Menüpunktes kann über verschiedene Anwahlmittel erfolgen, bewährt haben sich die Computermaus, Trackballs, Touch Screens oder definierte oder definierbare Tastenkombinationen.

Unter Drop-Down Menüs sollen ebenso verstanden werden s.g. kontextbezogene Menüs gleichen Aufbaus, die sich durch Anfahren einer beliebigen Stelle der Applikation öffnen lassen und deren Menüeinträge sich situations- und kontextbezogen zusammensetzen. Auch diese kontextbezogenen Menüs öffnen in unmittelbarer Nähe des Anwahlpunktes entweder darunter, darüber oder daneben.

Unter Drop-Down Menüs sollen ausdrücklich keine allgemein bekannten Bedienfenster (Programm-, Anwahl-, Auswahl-, oder Dialogfenster) verstanden werden, die den für diese typischen Aufbau (Fensterrahmen, Titelleiste, Dialogfeld) besitzen und fenstertypische Eigenschaften wie z.B. Verschiebbarkeit aufweisen.

Die Drop-Down Menüs beinhalten i.d.R. eine Anzahl von mit dem Menüpunkt oder dem entsprechenden Kontext themenverwandten Menüeinträgen, die wiederum, in Form einer einspaltigen Tabelle im Dialog des Drop-Down Menüs angeordnet sind, einzeln angewählt werden und somit verschiedene Aktionen auslösen können. Die Menüeinträge werden durch einen Texteintrag beschrieben, in einigen Fällen werden diesen Texteinträgen Symbole / Icons vorgeordnet. In Abhängigkeit der auszulösenden Aktionen unterscheidet man verschiedene Arten von Menüeinträgen. So können Menüeinträge beispielsweise direkt Aktionen auslösen, unterlagerte Menüebenen öffnen oder der Abgrenzung und Gruppierung anderer Menübefehle dienen.

Ferner können Menüeinträge als so genannte Checked-Menu-Items dazu dienen, verschiedene Modi ein- bzw. auszuschalten. Obwohl Checked-Menu-Items im Vergleich zu anderen Menüeinträgen andere Aufgaben haben und anders genutzt werden sind sie in Drop-Down Menüs von anderen Menüeinträgen nicht zu unterscheiden. Sie unterliegen jedoch hinsichtlich des An- und Auswahlverhaltens nahezu den gleichen Mechanismen wie andere Menüeinträge auch. So werden im angewählten Zustand die Checked Menü Items vielfach durch ein Ankreuzfeld gekennzeichnet, während sie im nicht angewählten Zustand, wie bei anderen Menüeinträgen auch, keine Kennung aufweisen. Dies stellt einen erheblichen Nachteil dar, da ein inaktiver Checked Menu Item im Drop-Down Menü sich nicht von anderen Menüeinträgen unterscheidet und somit vom Anwender nicht als solcher erkennbar ist. In anderen Fällen werden Checked-Menu-Items, genau wie andere Menüeinträge auch, durch Texteinträgen vorangestellte, den jeweiligen Menüeintrag beschreibende, Symbole gekennzeichnet. Im Falle des aktivierten Menüeintrages erhalten diese Symbole einen zusätzlichen Rahmen, im abgewählten Zustand werden die Symbole ohne zusätzlichen Rahmen dargestellt.

Auch diese Kennzeichnung löst das Problem der Unterscheidbarkeit von Checked Menü Items und anderen Menüeinträgen nicht. Im Gegenteil, bei komplexeren Programmen und einer Vielzahl von Symbolen sind die vorangestellten Symbole oft nicht mehr selbsterklärend und der Widererkennungswert dieser speziellen Symbole ist stark eingeschränkt.

Wie bereits erwähnt werden über Checked Menü Items verschiedene Modi aktiviert bzw. inaktiv geschaltet. Befinden sich in einem Drop-Down Menü mehrere Menüeinträge vom Typ Checked Menü Item, so können diese entweder unabhängig voneinander an- bzw. abgewählt werden und haben damit die Funktion so genannter Check-Boxes, oder sie schließen sich gegenseitig aus, d.h. nur einer dieser Menüeinträge kann zur Zeit aktiv sein und haben damit die Funktion so genannter Radio-Button. In der Praxis hat es sich als äußerst nachteilig erwiesen, nicht zweifelsfrei Kenntnis darüber zu haben, ob eine Check-Box und damit eine zusätzliche Option angewählt worden ist, oder ein Radio-Button bedient wird, der mit seiner Anwahl einen anderen gesetzten Modi aufgibt.

Zu den Mechanismen von Drop-Down Menüs gehört das Verhalten nach Anwahl eines Menüeintrages. Mit Ausnahme des Aufrufs einer unterlagerten Menüebene schließt sich das Drop-Down Menü unmittelbar nach Anwahl des Menüeintrages. Dies ist im Zusammenhang mit Checked-Menu-Items sehr nachteilig, da der Anwender nicht mehr erkennen kann, ob die gewünschte Einstellung nun erfolgreich war oder nicht. Um dies zweifelsfrei festzustellen, ist ein zeitraubendes, erneutes Öffnen des Drop-Down Menüs notwendig. Nachteilig wird das sofortige selbsttätige Schließen des Drop-Down Menüs insbesondere dann, wenn der Anwender beispielsweise mehrere Check-Box Einträge durchzuführen hat, da jedes Mal von Beginn an durch das Drop-Down Menü navigiert werden muss, um eine Einstellung zu verändern.

Check-Boxes und Radio Button als solche sind im Stand der Technik bekannt und werden in den vorgenannten Programm-, Anwahl-, Auswahl-, oder Dialogfenstern bereits eingesetzt. Das Problem der Unterscheidbarkeit und des selbsttätigen Schließens stellt sich hier nicht, da hier i.d.R. einheitliche Symbolik zur Unterscheidung von Check-Boxes und Radio Button eingesetzt wird und ferner die o.g. Fenster nur aktiv durch den Anwender geschlossen werden können. Damit hat der Anwender genug Zeit zu Orientierung und Überprüfung seiner Eingaben.

US 6489978 hat sich mit der Problematik des automatischen Schließens von Drop-Down Menüs mit Checked Menu-Items befasst und schlägt vor, eine parametriebare und mit Einstellungen im Menü nachtriggerbare Zeit ablaufen zu lassen, welche dem Anwender somit die Möglichkeit gibt, weitere Einträge im Menü vorzunehmen. Das Drop Down Menü kann vorzeitig geschlossen werden, indem der Anwender außerhalb des Menü klickt.

Die Problematik der Unterscheidbarkeit von Check-Boxes und Radio Button, insbesondere im inaktiven Zustand wird durch US 6489978 nicht gelöst.

Aufgabe der vorliegenden Erfindung ist es daher, eine Vorrichtung und ein Verfahren anzugeben, welches auf einfache Weise ein durchgängiges, aufwandsarmes, effektives Arbeiten mit Checked Menü Items in Drop-Down Menüs ermöglicht.

Die Aufgabe wird gelöst durch eine Vorrichtung zur Einstellung und Anzeige von Information, Daten und/oder Eingabeelementen auf einer grafischen Bedienoberfläche, insbesondere auf einem Bildschirm, mit (i) mindestens einer Menüleiste bestehend aus einer Anzahl von Menüpunkten, wobei mindestens ein Drop-Down Menü zu einem Menüpunkt zugeordnet ist, wobei das Drop-Down Menü eine Anzahl von unterlagerten Menüebenen enthalten kann oder (ii) mindestens einem kontextbezogenen Drop-Down Menü, wobei das kontextbezogene Drop-Down Menü eine Anzahl von unterlagerten Menüebenen enthalten kann wobei (i) und (ii) eine Menge von Menüeinträgen im Drop-Down Menü oder Menüeinträge in unterlagerten Menüebenen aufweisen und wobei die Menüeinträge in mindestens einem Drop-Down Menü derart ausgebildet sind, dass a) wenigstens eine Anzahl dieser Menüeinträge in beliebiger Kombination an- und abwählbare Menüeinträge so genannte Check-Box Listen und/oder b) wenigstens eine Anzahl dieser Menüeinträge mindestens sich gegenseitig ausschließende und damit lediglich umschaltbare Menüeinträge so genannte Radio-Button Listen sind und dadurch gekennzeichnet ist, dass die Vorrichtung Mittel zur Interaktion aufweist, durch die der Menüeintrag gemäß a) und b) zu jedem Zeitpunkt seine eigene, signifikante, den Charakter des Menüeintrags beschreibende Zustandsänderung und - kennzeichnung im Drop-Down Menü erhält.

Die Aufgabe wird weiterhin gelöst durch ein Verfahren zur Einstellung und Anzeige von Information, Daten und/oder Eingabeelementen über Drop-Down Menüs grafischer Bedienoberflächen, wobei das Drop-Down Menü oder seine unterlagerten Menüebenen eine Menge von Menüeinträgen beliebiger Art aufweist, wobei die Menge von Menüeinträgen wenigstens eine Anzahl von in beliebiger Kombination an- und abwählbaren Menüeinträgen so genannte Check-Box Listen und/oder sich gegenseitig ausschließenden und damit lediglich umschaltbaren Menüeinträgen so genannte Radio-Button-Listen umfasst und dadurch gekennzeichnet ist, dass der Menüeintrag Check-Box Listen und der Menüeintrag Radio-Button-Listen zu jedem Zeitpunkt jeweils seine eigene, signifikante, den Charakter des Menüeintrags beschreibende Zustandsänderung und-kennzeichnung im Drop-Down Menü aufweist.

Check Boxes und Radio-Buttons erhalten jeweils ihre eigene dem Charakter der Check Box bzw. dem Charakter der Radio-Buttons entsprechende Kennzeichnung. Damit lassen sich vorteilhaft Check-Box und Radio-Button Einträge zu jedem Zeitpunkt sowohl untereinander als auch von anderen Menüeinträgen im Drop-Down Menü unterscheiden, und zwar auch dann, wenn keine Anwahl/Aktivierung einer Check-Box oder eines Radio-Button stattgefunden hat. Der Anwender hat nach Öffnen des relevanten Drop-Down Menüs umgehend einen Überblick und kann sich so wesentlich schneller im Menü orientieren. Ferner kann mit dem Erkennen der Art des Eintrags eine erste Wertung der Einträge durchgeführt werden. Die oft verbreitete Praxis des Ausprobierens, welche insbesondere unter den im Umgang mit der Software weniger geübten Anwendern verbreitet ist, kann weitestgehend entfallen.

In einer bevorzugten Ausführungsform werden als Anzeigemittel zur signifikanten Zustandsänderung und -kennzeichnung von Check-Box und Radio-Button Einträgen unterschiedliche Symbole herangezogen. Diese sollten sich links von dem, den Menüeintrag kennzeichnenden Textstring, befinden. Damit wird die für einige andere Menüeinträge verbreitete visuelle Unterstützung durch Symbolik aufgegriffen und fortgeführt.

In einer weiteren Ausführungsvariante ist das Anzeigemittel, welches die Check-Box Einträge im Drop-Down Menü kennzeichnet, ein quadratischer Rahmen, wobei als ein solcher auch ein quadratförmiger Rahmen mit abgerundeten Ecken verstanden sein soll. Aufgrund der Bekanntheit dieser Symbolik aus anderen Bedienfenstern ist der Erkennungsgrad hoch, Fehlinterpretationen sind auf diese Weise ausgeschlossen. Der inaktive Zustand des Menüeintrages wird durch einen vorzugsweise quadratischen Rahmen dargestellt, der aktive Zustand wird durch einen Haken im Rahmen gekennzeichnet.

In einer weiteren Variante hat das Anzeigemittel, welches die signifikante Zustandsänderung und -kennzeichnung, von sich gegenseitig ausschließenden und damit lediglich umschaltbaren Menüeinträgen, darstellt, die Form eines Anwahlkreises. Der inaktive Zustand des Menüeintrages wird durch einen unausgefüllten Kreis größeren Durchmessers, der aktive Zustand durch einen zusätzlichen, ausgefüllten Kreis kleineren Durchmessers gekennzeichnet, der zentriert im Kreis mit dem größeren Durchmesser liegt. Aufgrund der Bekanntheit dieser Symbolik aus anderen Bedienfenstern ist der Erkennungsgrad hoch, Fehlinterpretationen sind auf diese Weise ausgeschlossen.

Besonders vorteilhaft ist eine Ausführungsform, die dadurch gekennzeichnet ist, dass die Mittel zur Interaktion derart ausgeprägt sind, dass die Zustandsänderung und -kennzeichnung unmittelbar nach An- oder Abwahl durch den Anwender im Drop-Down Menü wirksam wird. Dies ermöglicht dem Benutzer die sofortige Überprüfung des Erfolges der Interaktionen mit dem Computer. Wird die Zustandsänderung angezeigt, ist sie vom Computer verarbeitet worden.

Eine weitere besonders bevorzugte Ausführungsform ist dadurch gekennzeichnet, dass die Mittel zur Interaktion das Drop-Down Menü nach An- oder Abwahl eines in beliebiger Kombination an-und abwählbaren Menüeintrags oder eines sich gegenseitig ausschließenden und damit lediglich umschaltbaren Menüeintrags nicht schließen.

Hierbei ist vor allem vorteilhaft, dass dem Benutzer die Ergebnisse der Interaktion mit dem Computer angezeigt werden. Er hat Zeit etwaige Fehleingaben sofort zu korrigieren. Die Überprüfung der Eingaben durch nochmaliges zeitaufwändige Öffnen des Drop-Down Menüs und seiner eventuell vorhandenen unterlagerten Menüebenen entfällt. Der Vorteil offenbart sich insbesondere dann, wenn wie bei Check-Box-Einträgen oft notwendig, mehrere Auswahloptionen gleichzeitig angewählt werden sollen. Herkömmlich ist für jede einzelne Auswahloption das Durchnavigieren durch das Drop-Down Menü und etwaigen unterlagerten Menüebenen notwendig, dies entfällt hierbei gänzlich.

In einer anderen vorteilhaften Ausführungsform sind die Mittel zur Interaktion derart eingestellt, dass der Anwender das Schließen des Drop-Down Menüs aktiv durch Quittierung einleitet. In diesem Falle kann beispielsweise die Quittierung durch den Anwender derart erfolgen, dass er ein Auswahlmittel außerhalb der durch das Drop-Down Menü aufgespannten Fläche klickt. Eine andere Möglichkeit der Quittierung ergibt sich beispielsweise durch das Drücken einer bestimmten Taste oder Tastenkombination.

Besonders vorteilhaft ist eine Ausführungsform, die dadurch gekennzeichnet ist, dass Verzögerungsmittel das Drop-Down Menü selbsttätig schließen. Diese Ausführungsform verbindet die Vorteile, die eine Überprüfung von Menüeinträgen oder die Möglichkeit einer Mehrfachauswahl in einem Drop-Down Menü bietet mit dem Erfordernis nach effizienten Arbeiten. In dieser vorgeschlagenen Variante kann nämlich ein zusätzlicher Mouseklick oder eine andere Form der Quittierung zum Schließen des Drop-Down Menüs entfallen.

In einer weiteren vorteilhaften Variante werden die Verzögerungsmittel nicht aktiviert, solange sich das Auswahlmittel innerhalb der Oberfläche befindet, die durch das Drop-Down Menü aufgespannt wird. Sollte sie aktiviert worden sein, indem sich das Auswahlmittel außerhalb des Oberflächenbereiches des Drop-Down Menü befindet, so können sie vor ihrem Ablauf wieder rückgesetzt werden, indem der Anwender das Auswahlmittel wieder innerhalb der Oberfläche des Drop-Down Menüs positioniert. Sie wird mit dem Verlassen dieses Oberflächenbereiches erneut aktiviert. Hiermit ergibt sich sehr vorteilhaft eine Möglichkeit, die in Check-Box- oder Radio-Button-Listen gemachten Einträge zu bewerten und zu kontrollieren und die Anzahl von Aktionen mit den Auswahlmitteln zu minimieren.

In einer weiteren Ausführungsform sind die Verzögerungsmittel parametrierbar. In diesem Fall können sie auf die wechselnden Bedürfnisse des Anwenders zugeschnitten werden. Der Wertebereich für die Parametrierungsmöglichkeiten sollte Vorteilhafterweise mit dem Wert Null beginnen.

Nachfolgend werden Ausführungsbeispiele der Erfindung anhand von Zeichnungen näher erläutert. Darin zeigen:
- FIG 1: beispielhaft eine Oberfläche mit Checked-Menu-Items im Stand der Technik
- FIG 2: beispielhaft eine Oberfläche mit Checked-Menu-Items

Einander entsprechende Teile sind in allen Figuren mit den selben Bezugszeichen versehen.

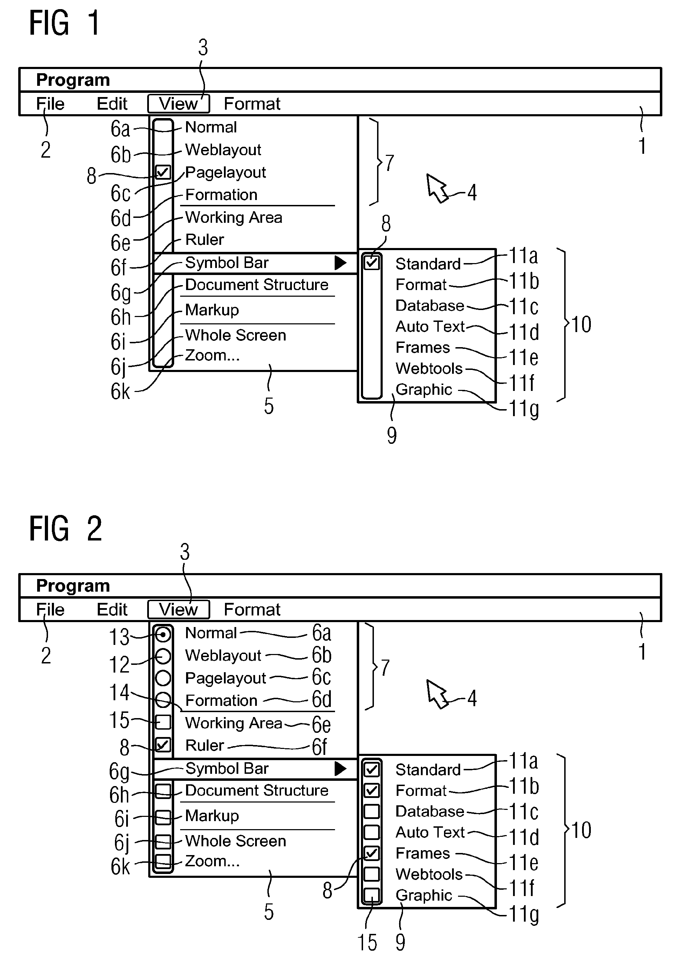

Fig 1 zeigt eine Menüleiste 1 mit den Menüpunkten 2, die durch die Textstrings "File", "Edit", "View" und "Format" bezeichnet sind. Die jeweiligen Textstrings werden von einem sensitiven Feld 3 umfasst, welches durch Anfahren mit dem Auswahlmittel 4 vorgewählt und in einer weiteren Aktion mit dem Auswahlmittel 4 aktiviert werden kann. Die Aktivierung wird durch einen Mouseklick ausgelöst. Vorwahl und Aktivierung ist gleichermaßen über Tastatureingaben möglich, wobei die Anwahl i.d.R. durch eine erste Tastenkombination, die Aktivierung durch eine weitere Tastatureingabe ausgelöst wird. Mit Aktivierung wird unterhalb des Menüpunktes 3 ein Drop-Down Menü 5 aufgeblendet. Das Drop-Down Menü 5 besteht aus einer Anzahl von Menüeinträgen 6a bis 6k, die i.d.R. in Zusammenhang zur im Menüpunkt 3 genannten Begrifflichkeit stehen. Dabei stellen die Menüeinträge 6a bis 6d Checked Menü Items einer Radio-Button-Liste 7 mit sich gegenseitig ausschließenden und damit lediglich umschaltbaren Menüeinträgen dar, was dem Anwender zunächst nicht offenbart wird. Die Menüeinträge der Radio-Button-Liste 7 sind nicht durch zusätzliche eigene Symbolik gekennzeichnet. Die Aktivierung eines Menüeintrages 6a bis 6d führt zur Deaktivierung des zuvor aktiven Menüeintrages 6a bis 6d und zur sofortigen Schließung des Drop-Down Menüs 5. In Fig 1 ist der Eintrag 6a aktiviert. Die Aktivierung des Eintrags 6a ist über einen Icon, in Fig 1 über einen quadratförmigen Rahmen mit Haken 8, angezeigt.

Die Menüeinträge 6e, 6f und 6h bis 6j stellen ebenfalls, dem Anwender nicht offenbarte Checked Menü Items dar, diesmal jedoch vom Typ Check-Box. Sie sind in beliebiger Kombination an- oder abwählbar. Die Menüeinträge 6e, 6f und 6h bis 6j sind nicht durch zusätzliche eigene Symbolik gekennzeichnet. Menüeintrag 6f befindet sich im aktivierten Zustand, was über den quadratförmigen Rahmen mit Haken 8 dargestellt wird. Die Aktivierung eines der Menüeinträge 6e, 6f und 6h bis 6j führt zum ausgewählten Modi und zum sofortigen Schließen des Drop-Down Menüs 5.

Der Menüeintrag 6k öffnet nach Aktivierung ein weiteres Eingabefenster und schließt ebenfalls das Drop-Down Menü 5. Menüeintrag 6g öffnet nach Anfahren mit dem Auswahlmittel 4 die unterlagerte Menüebene 9 der zweiten Ebene. Die Menüeinträge 11a bis 11g in der unterlagerten Menüebene 9 des Drop-Down Menü 5 stellen Checked Menü Items einer zusammenhängenden Check-Box Liste 10 dar. Der Anwender hat nach Öffnen der unterlagerten Menüebene 9 weder die Information darüber, dass es sich um Checked Menü Items noch dass es sich um eine Check-Box Liste handelt. Die Menüeinträge 11a bis 11g sind zu diesem Zeitpunkt nicht durch zusätzliche eigene Symbolik gekennzeichnet.
In der unterlagerten Menüebene 9 ist der Eintrag 11a aktiv. Die Auswahl eines weiteren Menüeintrags aus der unterlagerten Menüebene 9 führt zum sofortigen Schließen dieser und des Drop-Down Menüs 5.

Fig 2 zeigt die Menüleiste 1 mit den zur Fig 1 identischen Menüpunkten 2, welche wiederum von einem sensitivem Feld 3 umfasst sind und durch Anfahren mit dem Auswahlmittel 4 vorgewählt und in einer weiteren Aktion mit dem Auswahlmittel 4 aktiviert werden können. Mit Aktivierung wird unterhalb des Menüpunktes 3 ein Drop-Down Menü 5 aufgeblendet. Das Drop-Down Menü 5 besteht aus der gleichen Anzahl von Menüeinträgen 6a bis 6k. Die Menüeinträge 6a bis 6d bilden wiederum die Radio-Button-Liste 7. Im Unterschied zur Fig 1 sind die Menüeinträge 6a bis 6d nunmehr durch vorangestellte Anwahlkreise 12, 13 dargestellt, wobei der unausgefüllte Auswahlkreis 12 einen nicht aktivierten Menüeintrag und der mit einem ausgefüllten Kreis kleineren Durchmessers ausgefüllte Auswahlkreis 13 einen aktivierten Menüeintrag kennzeichnet. Damit sind diese Radio-Buttons zu jedem Zeitpunkt über ihre signifikante, dem Charakter des Radio-Buttons entsprechende Symbolik als solche zu erkennen. In Fig 2 ist der Menüeintrag 6a aktiv. Würde nunmehr mittels Auswahlmittel 4 der Menüeintrag 6c angewählt, so würde sich der unausgefüllte Auswahlkreis 12 durch den ausgefüllten Auswahlkreis 13 ersetzt. Gleichzeitig würde der aufgefüllte Auswahlkreis 13 vor dem Menüeintrag 6a in den unausgefüllten Auswahlkreis 12 wechseln. In Kombination mit den vorbeschriebenen Ausführungsformen würde sich das Drop-Down Menü 5 erst nach Quittierung - also der bewussten Aktion des Anwenders - mit dem Auswahlmittel 4 oder nach Ablauf einer Verzögerungszeit schließen, wobei beide Varianten dem Anwender die Möglichkeit gäbe die Interaktion mit dem Computer zu überprüfen.

Durch den Trennstrich 14 wird die Radio-Button-Liste 7 abgeschlossen, möglicherweise folgende Radio-Button werden nicht mehr von der Radio-Button-Liste 7 umfasst. Auf diese Weise erhält der Anwender nach Öffnen des Drop-Down Menüs 5 sofort die Information, das es sich bei den Menüeinträgen 6a bis 6d um Einträge einer Radio-Button-Liste handelt und welcher Eintrag gerade aktiv ist.

Die Menüeinträge 6e, 6f und 6h bis 6j erhalten im inaktiven Zustand ein dem Texteintrag vorangestellten quadratförmigen unausgefüllten Rahmen 15 und sind somit eindeutig als Checked Menü Item vom Typ Check-Box gekennzeichnet. In Fig. 2 ist Menüeintrag 6f aktiv geschaltet. Würde der Anwender mit dem Auswahlmittel 4 nunmehr beispielsweise den Menüeintrag 6i anwählen, so würde der Rahmen 15 durch den Rahmen mit Haken 8 ersetzt. Der Rahmen mit Haken 8 vor dem Menüeintrag 6f bleibt von dieser Interaktion unberührt. Bei gleichzeitiger Realisierung einer der Ausführungsformen bei denen das Drop-Down Menü nicht unmittelbar schließt, wäre eine Prüfung dieser Bedienung durch den Anwender leicht möglich. Das Gleiche gilt für die Menüeinträge 11a bis 11g der Check-Box Liste 10 in der unterlagerten Menüebene 9, welches durch Anwahl des Menüeintrags 6g geöffnet wird. Auch hier werden die Menüeinträge 11a bis 11g im inaktiven Zustand durch eine n Rahmen 15 und im aktiven Zustand durch einen Rahmen mit Haken 8 dargestellt.

## Patentansprüche

1. Vorrichtung zur Einstellung und Anzeige von Information, Daten und/oder Eingabeelementen auf einer grafischen Bedienoberfläche, insbesondere auf einem Bildschirm,
i) mit mindestens einer Menüleiste (1) bestehend aus einer Anzahl von Menüpunkten (2), wobei
- mindestens ein Drop-Down Menü (5) zu einem Menüpunkt (2) zugeordnet ist, wobei das Drop-Down Menü (5) eine Anzahl von unterlagerten Menüebenen (9) enthalten kann oder
ii) mit mindestens einem kontextbezogenen Drop-Down Menü, wobei das kontextbezogene Drop-Down Menü eine Anzahl von unterlagerten Menüebenen enthalten kann wobei a) und b)
- eine Menge von Menüeinträgen (6a-6k, ) im Drop-Down Menü (5) oder Menüeinträgen (11a-11g) in unterlagerten Menüebenen (9) aufweisen wobei
- die Menüeinträge in mindestens einem Drop-Down Menü (5) oder mindestens einer unterlagerten Menüebene (9) derart ausgebildet sind, dass a) wenigstens eine Anzahl dieser Menüeinträge in beliebiger Kombination an- und abwählbare Menüeinträge (6e, 6f, 6h-6j, 11a-11g) sind und/oder dass b) wenigstens eine Anzahl dieser Menüeinträge mindestens sich gegenseitig ausschließende und damit lediglich umschaltbare Menüeinträge (6a-6d) sind
**dadurch gekennzeichnet, dass**
die Vorrichtung Mittel zur Interaktion aufweist, durch die der Menüeintrag gemäß a) und b) zu jedem Zeitpunkt seine eigene, signifikante, den Charakter des Menüeintrags beschreibende Zustandsänderung und -kennzeichnung im Drop-Down Menü (5) und im unterlagerten Menü (9) erhält.

2. Vorrichtung nach Anspruch 1, **dadurch gekennzeichnet, dass** die Mittel zur Interaktion Anzeigemittel umfassen, die die eigene, signifikante Zustandsänderung und -kennzeichnung in Form von Symbolen darstellt.

3. Vorrichtung nach Anspruch 2, **dadurch gekennzeichnet, dass** die Anzeigemittel der signifikanten Zustandsänderung und -kennzeichnung des in beliebiger Kombination an- und abwählbaren Menüeintrags im nicht aktivierten Zustand die Form eines quadratischen unausgefüllten Rahmens (8) und im aktivierten Zustand die Form eines quadratischen Rahmens mit Haken (15) aufweisen.

4. Vorrichtung nach Anspruch 2, **dadurch gekennzeichnet, dass** die Anzeigemittel der signifikanten Zustandsänderung und -kennzeichnung der sich gegenseitig ausschließenden und damit lediglich umschaltbaren Menüeinträge im nicht aktiviertem Zustand die Form eines unausgefüllten Anwahlkreises (12) und im aktiviertem Zustand die Form eines Anwahlkreises mit zusätzlichem, zentrierten und ausgefüllten Anwahlkreis kleineren Durchmessers aufweisen.

5. Vorrichtung nach einem der vorhergehenden Ansprüche, **dadurch gekennzeichnet, dass** die Mittel zur Interaktion derart ausgestaltet sind, dass die Zustandsänderung und -kennzeichnung unmittelbar nach An- oder Abwahl im Drop-Down Menü (5) wirksam ist.

6. Vorrichtung nach einem der vorhergehenden Ansprüche, **dadurch gekennzeichnet, dass** die Mittel zur Interaktion derart ausgestaltet sind, dass das Drop-Down Menü (5) nach An- oder Abwahl eines in beliebiger Kombination an-und abwählbaren Menüeintrags (6e, 6f, 6h-6j, 11a-11g) oder eines sich gegenseitig ausschließenden und damit lediglich umschaltbaren Menüeintrags (6a-6d) nicht schließt.

7. Vorrichtung nach Anspruch 6, **dadurch gekennzeichnet, dass** die Mittel zur Interaktion derart ausgeprägt sind, dass das Drop-Down Menü (5) nach Quittierung des Anwenders schließt.

8. Vorrichtung nach Anspruch 6, **dadurch gekennzeichnet, dass** die Mittel zur Interaktion Verzögerungsmittel aufweisen, die das Drop-Down Menü (5) selbsttätig schließen.

9. Vorrichtung nach Anspruch 8, **dadurch gekennzeichnet, dass** die Verzögerungsmittel nicht aktiviert und wieder rückgesetzt werden, wenn das Auswahlmittel (4) innerhalb der durch das Drop-Down Menü (5) aufgespannten Oberfläche positioniert ist.

10. Vorrichtung nach einem der Ansprüche 8 oder 9, **dadurch gekennzeichnet, dass** die Verzögerungsmittel parametrierbar sind.

11. Verfahren zur Einstellung und Anzeige von Information, Daten und/oder Eingabeelementen über Drop-Down Menüs (5) grafischer Bedienoberflächen, wobei das Drop-Down Menü (5)oder seine unterlagerten Menüebenen (9) eine Menge von Menüeinträgen (6a-6k, 11a-11g) beliebiger Art aufweist, wobei die Menge von Menüeinträgen wenigstens eine Anzahl von
a) in beliebiger Kombination an- und abwählbaren Menüeinträgen (6e, 6f, 6h-6j, 11a-11g) und/oder
b) sich gegenseitig ausschließenden und damit lediglich umschaltbaren Menüeinträgen (6a-6d)
umfasst, **dadurch gekennzeichnet, dass** der Menüeintrag gemäß a) und b) zu jedem Zeitpunkt jeweils seine eigene, signifikante, den Charakter des Menüeintrags beschreibende Zustandsänderung und -kennzeichnung im Drop-Down Menü (5) und im unterlagerten Menü (9) aufweist.

12. Verfahren nach Anspruch 11, **dadurch gekennzeichnet, dass** die eigene, signifikante Zustandsänderung und -kennzeichnung durch Symbole dargestellt wird.

13. Verfahren nach Anspruch 12, **dadurch gekennzeichnet, dass** die signifikante Zustandsänderung und -kennzeichnung des in beliebiger Kombination an- und abwählbaren Menüeintrags im nicht aktivierten Zustand die Form eines quadratischen unausgefüllten Rahmens (8) und im aktivierten Zustand die Form eines quadratischen Rahmens mit Haken (15) aufweisen.

14. Verfahren nach Anspruch 12, **dadurch gekennzeichnet, dass** die signifikante Zustandsänderung und -kennzeichnung eines sich gegenseitig ausschließenden und damit lediglich umschaltbaren Menüeinträgen im nicht aktivierten Zustand die Form eines unausgefüllten Anwahlkreises (12) und im aktiviertem Zustand die Form dieses Anwahlkreises mit zusätzlichem, zentrierten und ausgefüllten Anwahlkreis kleineren Durchmessers aufweisen.

15. Verfahren nach einem der Ansprüche 11-14, **dadurch gekennzeichnet, dass** die Zustandsänderung und-kennzeichnung unmittelbar nach An- oder Abwahl im Drop-Down Menü (5) wirksam wird.

16. Verfahren nach einem der Ansprüche 11-15, **dadurch gekennzeichnet, dass** das Drop-Down Menü (5) nach An- oder Abwahl eines in beliebiger Kombination an- und abwählbaren Menüeintrags (6e, 6f, 6h-6j, 11a-11g) oder eines sich gegenseitig ausschließenden und damit lediglich umschaltbaren Menüeintrags (6a-6d) nicht schließt.

17. Verfahren nach Anspruch 16, **dadurch gekennzeichnet, dass** das Drop-Down Menü (5) nach Quittierung des Anwenders schließt.

18. Verfahren nach Anspruch 16, **dadurch gekennzeichnet, dass** das Drop-Down Menü (5) nach Ablauf einer Verzögerungszeit selbsttätig schließt.

19. Verfahren nach Anspruch 18, **dadurch gekennzeichnet, dass** die Verzögerungszeit nicht startet und wieder rückgesetzt wird, wenn das Auswahlmittel (4) innerhalb der durch das Drop-Down Menü (5) aufgespannten Oberfläche positioniert ist.

20. Verfahren nach einem der Ansprüche 18 oder 19, **dadurch gekennzeichnet, dass** die Verzögerungszeit parametrierbar ist.
